# EUROPÄISCHE PATENTSCHRIFT

(11) **EP 2 436 560 B1**
(45) Veröffentlichungstag und Bekanntmachung des Hinweises auf die Patenterteilung: **29.04.2015**
(21) Anmeldenummer: 11182199.7
(22) Anmeldetag: 21.09.2011
(51) Int. Cl.: B60R 1/076, F16B 21/04

(54) **System zur Befestigung einer Komponente an einer Tragstruktur**
System for fixing a component to a support structure
Système de fixation d'un composant sur une structure porteuse

(30) Priorität: 01.10.2010 DE 102010041859
(43) Veröffentlichungstag der Anmeldung: 04.04.2012
(73) Patentinhaber: MEKRA Lang GmbH & Co. KG, 91465 Ergersheim (DE)
(72) Erfinder: Lang, Werner, 91465 Ergersheim (DE); Heger, Sebastian, 91438 Bad Windsheim (DE); Bauer, Stefan, 91466 Gerhardshofen (DE)
(74) Vertreter: Winter, Brandl, Fürniss, Hübner, Röss, Kaiser, Polte - Partnerschaft mbB

(56) Entgegenhaltungen:
- WO-A1-2010/028699
- DE-U1- 9 407 340
- US-A- 3 778 015
- US-A1- 2007 194 203

## Beschreibung

Die Erfindung bezieht sich auf ein System zur lösbaren Verbindung wenigstens einer Komponente mit einem rohrförmigen Bauteil. Insbesondere bezieht sich die Erfindung auf ein System zur Verbindung von Komponenten eines Fahrzeugrückspiegels, bzw. zur Befestigung eines derartigen Rückspiegels an einem Rohr, das an einer Fahrzeugkarosserie angebracht ist.

Verbindungen von Komponenten mit rohrförmigen Bauteilen sind im Stand der Technik bekannt. Häufig werden beispielsweise sogenannte Rohrschellen z.B. über Anschweißen, -kleben, -löten, Schrauben oder Spritzgießen an den Komponenten befestigt, durch die dann die rohrförmigen Bauteile gesteckt werden. Der Durchmesser der Schellen wird dann - beispielsweise über eine oder mehrere tangential zum Rohrumfang liegende Schraubverbindungen - so verkleinert, dass das Rohr in der Schelle geklemmt wird. Derartige Rohrschellen können eine elastische Einlage aufweisen, um die Klemmkräfte zu erhöhen und auftretende Schwingungen zu dämpfen.

Derartige Rohrschellen sind unter anderem bei stationären Anlagen sehr weit verbreitet, um beispielsweise Rohre dauerhaft an Hauswänden zu befestigen.

Insbesondere bei der Montage von Massenprodukten wie Fahrzeugen ist es zweckmäßig, Schraubverbindungen so weit wie möglich durch andere, schneller montierbare Verbindungen zu ersetzen. Dabei dürfen selbstverständlich die Vorteile der bekannten Verbindungen, wie die Sicherheit gegen Lösen oder die Schwingungsresistenz, nicht aufgegeben werden; es ist im Gegenteil wünschenswert, diese Vorteile noch stärker zum Tragen zu bringen, wenn dies möglich ist.

Die US 2007 194 203 A1 sowie die WO2010 028 699 A1 offenbaren ein System nach dem Oberbegriff des Anspruchs 1.

Die Erfindung hat sich daher zur Aufgabe gesetzt, ein montagefreundliches System zur Verbindung einer Komponente mit einer rohrförmigen Tragstruktur zu schaffen. Diese Aufgabe wird durch ein System nach Anspruch 1 gelöst. Vorteilhafte Weiterbildungen sind Gegenstand der Unteransprüche.

Die vorliegende Erfindung schafft ein System, das es ermöglicht, mit einem einfachen Einstecken eines Verbindungselements durch eine oder mehrere Komponenten in eine Tragstruktur diese Komponenten an der Tragstruktur zu befestigen. Dabei kann im Gegensatz zum Stand der Technik auf eine separate als Gegenlager ausgebildete Komponente, wie beispielsweise eine auf der Innenseite der Tragstruktur anzubringende Mutter, verzichtet werden.

Das System nach Anspruch 1 weist ein Verbindungselement mit Bajonettnasen auf, die federnd in einem Gegenlager in der Hülle eines als Tragstruktur dienenden Bauteils gelagert sind. Weil das Gegenlager in der Hülle des Bauteils beispielsweise durch profilierte Querschnitte oder auch einfach durch eine konkave Innenform eines wenigstens abschnittsweise rohrförmigen Bauteils in dieses integriert wird, ohne dass
dafür ein weiteres Bauteil, z.B. als Gegenlager, benötigt wird, kann die Anzahl der nötigen Bauteile reduziert werden, was zu einer Senkung der Montagezeit und der Kosten führt. Durch die federnde Lagerung der Bajonettnasen im Gegenlager wird das Verbindungselement gesichert und kann daher nicht herausfallen.

Ein großer Vorteil der erfindungsgemäßen Bajonettverbindung gegenüber einer Schraubverbindung nach dem herkömmlichen Stand der Technik ist die schnelle Montage. Während bei üblichen Rohrschellen in der Regel eine Schraube angezogen werden muss, reicht bei der vorliegenden Erfindung ein Einstecken des Verbindungselements mit z.B. einer Vierteldrehung, um die Komponente an der Tragstruktur zu befestigen. Durch die Federung ergibt sich darüber hinaus der Vorteil, dass das System bei starken Belastungen zunächst in einem vergleichsweise großen Bereich elastisch ausweichen kann. Darüber hinaus kann über die von der Federung ausgeübte Kraft, die im Gegensatz zu Verschraubungen in weiten Bereichen konstruktiv vorgebbar ist, auch die Haltekraft und Elastizität der Verbindung gegenüber verschraubten Rohrschellen besser eingestellt werden.

Als Federelement kann bevorzugt eine Schraubenfeder verwendet werden. Schraubenfedern sind Bauteile, die in den verschiedensten Ausführungen kommerziell erhältlich sind. Mit derartigen Schraubenfedern kann auch das System nach der vorliegenden Erfindung an verschiedene Einsatzzwecke angepasst werden; insbesondere kann die Klemmkraft der Bajonettnasen im Gegenlager durch Austausch eines einzigen kostengünstig erhältlichen Bauteils anforderungsabhängig eingestellt werden.

Eine derartige Schraubenfeder kann sich bevorzugt an einer einstückig am Verbindungselement angefertigten Kappe abstützen. Dadurch wird vermieden, dass eine zusätzliche Stütze zwischen dem Verbindungselement und der Schraubenfeder eingebaut werden muss, was die Bauteilanzahl unnötig erhöhen würde. Alternativ ist es jedoch auch beispielsweise möglich, das Verbindungselement mit einem Außengewinde zu versehen, auf das dann eine Mutter mit Innengewinde geschraubt wird. An dieser Mutter kann sich dann das Federelement abstützen. Auf diese Weise kann noch im zusammengebauten Zustand die Federspannung genauer eingestellt werden, indem die Mutter auf dem eingebauten Verbindungselement gedreht wird, um die Federspannung anzupassen.

In einer bevorzugten Ausführungsform umfasst das Verbindungselement zwei um 180° gegeneinander versetzte Bajonettnasen. Bei einer derartigen Ausführung kann das Verbindungselement durch Einführen in das rohrförmige Bauteil und Drehen um 90° einfach montiert werden. Falls die Tragstruktur beispielsweise ein rundes Rohr ist, können sich die Bajonettnasen darüber hinaus selbst unter dem Federdruck an der konkaven Innenfläche des Rohrs ausrichten. Dadurch kann nicht nur ein spezielles Gegenlager eingespart werden, sondern es ist auch nicht notwendig, die Tragstruktur weiter angepasst an das System auszugestalten. Ist die Tragstruktur im Umfeld der Bajonettöffnung dagegen auf der Innenseite bzw. der dem zu befestigenden Element gegenüberliegenden Seite nicht konkav, sondern beispielsweise eben, kann eine Nut in die Tragstruktur integriert werden, in der die Bajonettnasen gelagert sind. Eine solche Nut kann eingefräst, eingeprägt oder auf andere im Stand der Technik bekannte Weise hergestellt werden.

Neben den Bajonettnasen, die in dem Gegenlager im Inneren eines kreisförmigen oder elliptischen (im Folgenden "runden") Rohrs fixiert werden, kann auch die an der Tragstruktur über das Verbindungselement zu fixierende Komponente eine spezielle Kontaktfläche aufweist, die komplementär zur Außenseite der Tragstruktur geformt ist, insbesondere bei einem nicht flachen Außenprofil der Tragstruktur. Durch einen solchen Aufbau wird die zu fixierende Komponente einfach in einer eindeutigen Stellung an der Tragstruktur befestigt.

Wenn die Tragstruktur beispielsweise wenigstens abschnittsweise ein rundes Rohr mit einer konvexen Außenhülle ist, kann die Komponente mit einem zum Außenumfang des runden Rohrs passenden konkaven Abschnitt ausgestaltet sein. Dabei muss der konkave Abschnitt nicht unbedingt exakt den gleichen Radius wie der Außenradius der Rohrhülle aufweisen. Falls der Radius des konkaven Abschnitts etwas kleiner als der Außenradius des runden Rohrs ist, wird dieser Abschnitt an beiden Rändern auf das Rohr gedrückt und dadurch stabil gehalten. Somit kann auch für verschiedene Rohrdurchmesser mit nur einem Zwischenbauteil eine stabile Verbindung hergestellt werden. Dadurch verringern sich die Kosten für die Lagerhaltung der entsprechenden Komponenten.

Insbesondere wenn die Komponente an einer Tragstruktur befestigt werden soll, die nicht gewölbt ist, sondern eine ebene Fläche aufweist, kann die Komponente über in die Tragstruktur integrierte Vorsprünge und Aussparungen ausgerichtet werden, die mit entsprechenden Vorsprüngen und Aussparungen der Komponente zusammenwirken. Auf diese Weise kann die vorliegende Erfindung zu einer verdrehsicheren Aufnahme von Komponenten führen, während ein Konstrukteur weitestgehende Freiheit bei der Ausgestaltung der Komponenten und der Tragstruktur hat.

In einem derartigen Fall können in der Tragstruktur Gegenlager für die Bajonettnasen vorgesehen sein, in denen sich die Bajonettnasen selbsttätig ausrichten. Insbesondere können V-förmige Einkerbungen bei einer ansonsten flächigen Tragstruktur das selbsttätige Ausrichten erleichtern.

Alternativ können auch bestimmte Freiheiten zugelassen werden, indem beispielsweise zwischen zwei ansteigenden Flächen (entsprechend den Seitenflächen der vorstehend beschriebenen V-förmigen Einkerbung) eine ebene Fläche vorgesehen wird, auf welcher die Bajonettnasen gleiten können. Auf diese Weise kann nicht nur das "Einrasten" der Bajonettnasen, sondern auch eine definiert beschränkte Relativbewegung zwischen den Bajonettnasen (und der mit ihnen verbundenen Komponente) und der Tragstruktur ermöglicht werden.

Nach einer besonders bevorzugten Ausführungsform dient das Befestigungssystem der vorliegenden Erfindung zur Befestigung eines Kraftfahrzeugspiegels an einem Rohr, das an der Karosserie des Kraftfahrzeugs angebracht ist. Falls beispielsweise ein Fahrzeugspiegel eines Kraftfahrzeugs erfindungsgemäß befestigt wird, kann dieser bei einem kleineren Unfall, z.B. bei einer Kollision beim Rangieren, elastisch ausweichen, weil die Bajonettnasen gefedert in dem Gegenlager fixiert sind. Sobald der Druck von außen nachlässt, geht der Spiegel dann wieder in seine ursprüngliche Stellung zurück. Durch diese Konstruktion kann eine Zerstörung des an der Tragstruktur befestigten Bauteils oder des kollidierenden Gegenstücks im Vergleich zu einem Fall, in dem das Bauteil wie im Stand der Technik über Rohrschellen fest an der Tragstruktur angeschraubt ist, häufig vermieden werden.

Nachstehend wird eine bevorzugte Ausführungsform der Erfindung unter Bezugnahme auf die beigefügten Figuren näher erläutert.
Figur 1 zeigt eine Explosionszeichnung eines Beispiels des erfindungsgemäßen Systems;
Figur 2A und Fig. 2B zeigen Beispiele für einen runden und einen viereckigen Aufbau einer Tragstruktur in einer quer zur Längsrichtung der Tragstruktur geschnittenen Ansicht;
Figur 3 zeigt einen Querschnitt durch ein Beispiel für eine erfindungsgemäß an der Tragstruktur zu befestigende Komponente;
Figur 4 zeigt ein Beispiel für eine weitere erfindungsgemäß an der Tragstruktur zu befestigende Komponente, die an einem Rohr als einer Tragstruktur anliegt; und
Figur 5 zeigt zwei Beispiele für in der Tragstruktur auszubildende Öffnungen in Draufsicht.

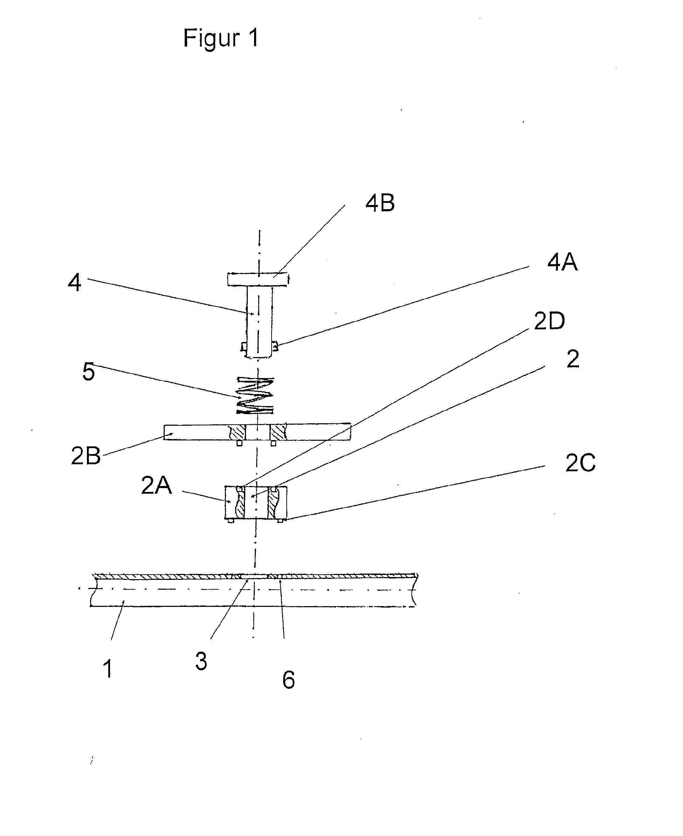

Fig. 1 zeigt eine Explosionszeichnung eines erfindungsgemäßen Systems mit der Tragstruktur 1. Vorzugsweise ist die Tragstruktur als ein Rohr ausgebildet; im Prinzip ist jedoch wie hier im Beispiel, jede flächige Struktur verwendbar, in welcher eine in der Tragstruktur eingebrachte Öffnung 1 A vorgesehen werden kann.

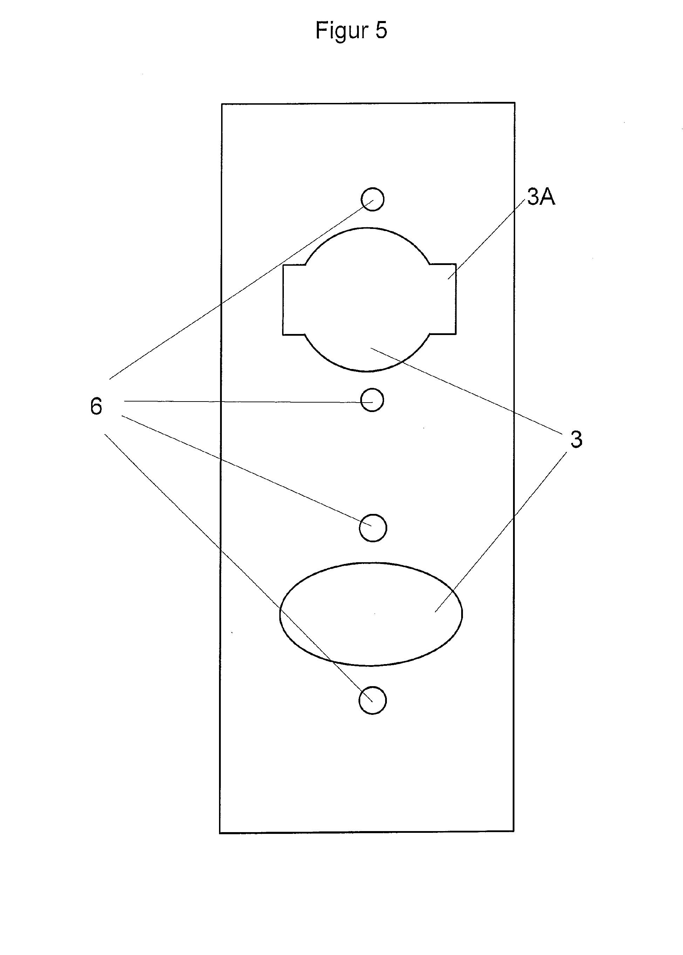

Diese Öffnung 1 A ist in einer bevorzugten Ausführungsform als ein Durchbruch ausgestaltet und ist im Wesentlichen nicht rotationssymmetrisch. Sie kann also beispielsweise als Langloch geformt sein. Bei einer Tragstruktur, die wie in Fig. 1 gezeigt durch ein rundes Rohr 1 realisiert ist, ist in dieser Ausführungsform die Öffnung wie in Fig. 5 gezeigt so ausgestaltet, dass zwei seitliche Aussparungen 3A quer zur Längsrichtung des Rohrs an ein rundes Loch 3 in der Außenfläche des Rohrs anschließen.

Durch diese beiden Aussparungen passen - in der Ausführungsform zwei - Bajonettnasen 4A, die an einem Verbindungselement 4 vorgesehen sind. Dieses Verbindungselement 4 kann daher durch die Öffnung durchgesteckt und so an der Tragstruktur montiert werden, wobei das Element 4 beim Durchstecken in einer Montagestellung so (in der Ausführungsform um 90°) gedreht ist, dass die Nasen 4A auf der längeren Achse des Langlochs liegen und durch die seitlichen Aussparungen 3A passen.

Nach dem Durchstecken wird das Element 4 um beispielsweise 90° in eine Fixierstellung gedreht. Dadurch liegen die Bajonettnasen 4A nicht mehr in den seitlichen Aussparungen, sondern verwenden die Rohrinnenwand als Gegenlager, und folglich kann das Element 4 nicht mehr aus der Tragstruktur 1 zurückgezogen werden.

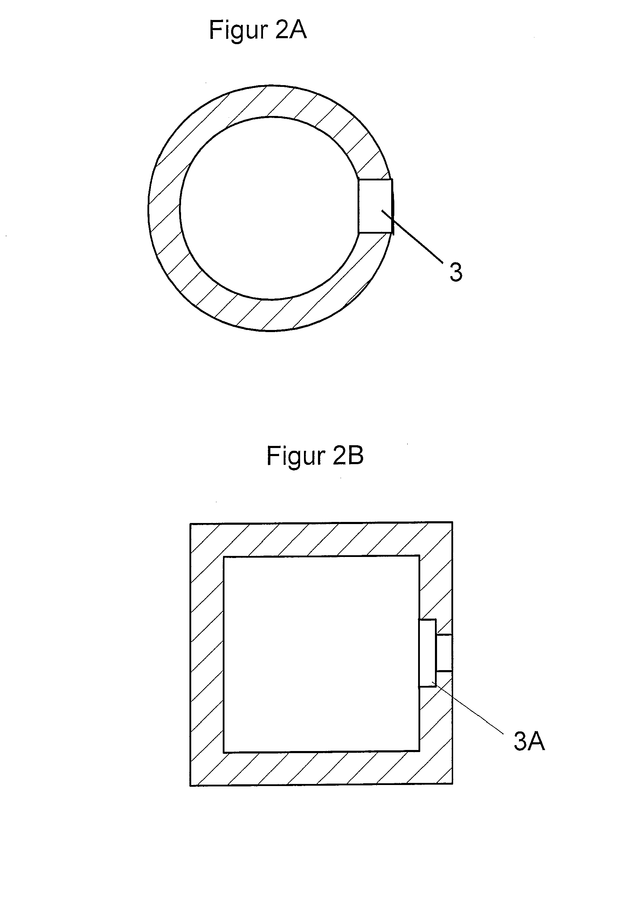

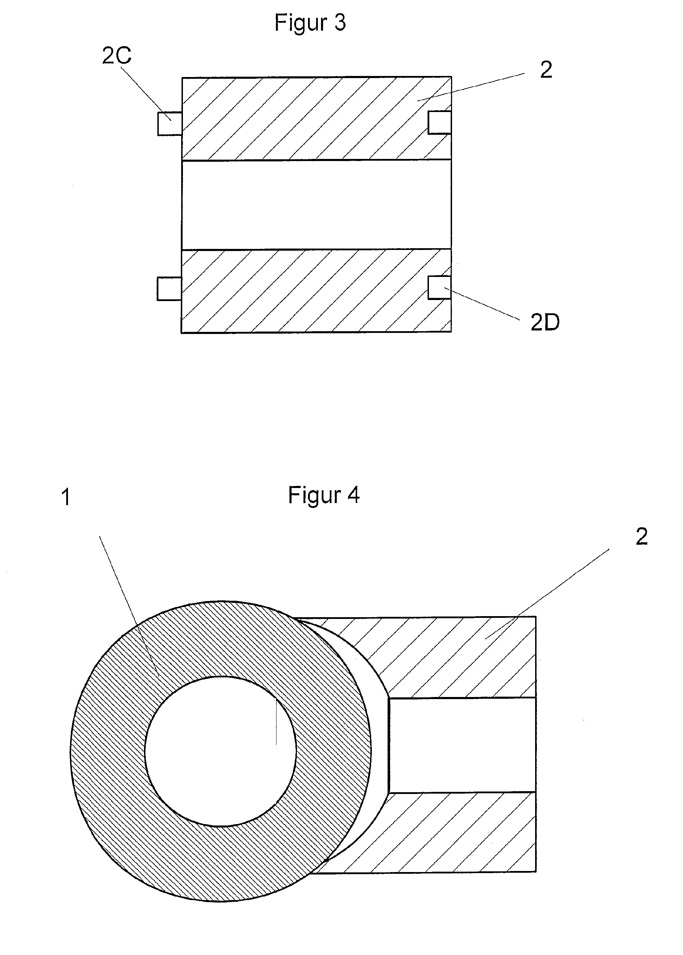

Um sicherzustellen, dass das Element 4 sich nicht von selbst in die Montagestellung zurückdreht, wird es in der vorstehend gezeigten Ausführungsform über eine in der Zusammenbauzeichnung der Fig. 1 gezeigte Feder 5 an einer an der den Bajonettnasen entgegen gesetzten Seite des Elements liegenden Kappe 4B mit einer Kraft beaufschlagt, welche die Bajonettnasen 4A gegen das runde Rohr 1 drückt. Durch die beispielsweise in Fig. 2A und Fig. 4 im Querschnitt gezeigte konkave Rohrinnenfläche des runden Rohrs 1 ergibt sich ein Formschluss zwischen den Bajonettnasen und dem runden Rohr 1, so dass die Struktur eine einfache inhärente Verdrehsicherung des Elements 4 bewirkt.

Eine derartige Verdrehsicherung eines gefederten Elements ist jedoch nicht auf die Verwendung in einer Tragstruktur aus einem runden Rohr beschränkt. Fig. 2B zeigt beispielhaft einen Querschnitt durch ein rechteckig geformtes Rohr. Bei einem solchen Rohr oder auch einer flächigen Tragstruktur kann der sich bei innen konkav geformten Rohren zwangsläufig ergebende Formschluss beispielsweise durch speziell profilierte integrierte Aussparungen 3B in der Tragstruktur 1 hergestellt werden, die als Bajonettnasen-Gegenlager wirken, in welche die Bajonettnasen 4A einrasten können, wie im Schnitt in Fig. 2B gezeigt. Vorzugsweise kann dieses Gegenlager (was hier nicht gezeigt ist) V-förmig sein.

Durch diesen Aufbau kann ein separates Gegenlager für die Bajonettnasen 4A eingespart werden; somit reduziert sich die Anzahl der zu montierenden Teile und der Montageaufwand sinkt.

Der vorstehend beschriebene Bajonettverschluss ist dazu vorgesehen, wenigstens eine weitere Komponente 2 über das Verbindungselement 4 am Rohr 1 zu befestigen. Diese weitere Komponente 2 kann, wie in Fig. 1 gezeigt, auch aus mehreren Einzelteilen 2A, 2B bestehen. Eines oder mehrere dieser Einzelteile 2A, 2B kann darüber hinaus auch zusätzliche Zapfen 2C aufweisen, die in weitere Löcher der Tragstruktur (des Rohrs) 1 eingreifen können. Selbstverständlich ist darüber hinaus auch eine andere formschlüssige Ausgestaltung des Einzelteils möglich; so kann bei einem runden Rohr 1 eine an die konvexe Außenfläche der Tragstruktur 1 angepasste konkave Seitenfläche der weiteren Komponente 2 zu einer präziseren Positionierung der Komponente 2 gegenüber der Tragstruktur führen, wie in Fig. 4 verdeutlicht. Auch dabei ergibt sich eine Selbstausrichtung, wie dies bereits für die Bajonettnasen 4A kurz erläutert wurde. An einer so an der Tragstruktur 1 ausgerichteten Komponente 2A können ebenfalls (wie an der Tragstruktur 1 oder der Komponente 2B) zusätzliche Zapfen 2C und/oder Aussparungen 2D auf der von der Tragstruktur abgewandten Seite vorgesehen sein, die mit entsprechenden Zapfen oder Aussparungen an der Tragstruktur und/oder der zweiten Komponente 2B zusammenwirken. Je ein Beispiel für derartige Zapfen 2C und Aussparungen 2D ist in Fig. 1 und nochmals vergrößert in Fig. 3 gezeigt. Somit sind die Komponenten 2A und 2B auch dann gegeneinander sowie gegenüber der Tragstruktur 1 ausgerichtet montierbar, wenn diese nicht - wie ein rundes Rohr - gewissermaßen inhärent für eine Zentrierung der Bauteile gegeneinander sorgt.

Fig. 5 zeigt zwei Beispiele, wie das Durchsteckloch 3 in der Tragstruktur 1 gestaltet werden kann. Im oberen Beispiel wird ein rundes Loch mit einer rechteckigen Aussparung 3A überlagert, durch welche die Bajonettnasen passen, deren Ausdehnung größer als der Durchmesser des runden Lochs, aber kleiner als die lange Seite der rechteckigen Aussparung ist. Dadurch kann das Verbindungselement mit den Bajonettnasen in Richtung des Rechtecks ausgerichtet durch die Tragstruktur 1 gesteckt werden und nach einer Drehung um 90° halten die Bajonettnasen das Verbindungselement unter dem Loch 3 fest. Alternativ kann das Durchsteckloch wie in im unteren Teil der Fig. 5 gezeigt eine elliptische Form aufweisen. Diese Form hat dieselben Wirkungen wie die kreisförmige Form mit den eckigen Aussparungen wie vorstehend beschrieben.

Neben beiden Durchstecklöchern sind in Fig. 5 noch beispielhaft jeweils zwei Ausrichtlöcher 6 gezeigt, an denen die zugehörige (nicht in Fig. 5 gezeigte) Komponente an der Tragstruktur 1 über die bereits beschriebenen Zapfen 2C ausgerichtet werden kann.

In einer besonders bevorzugten Ausführungsform ist die Tragstruktur 1 ein Rohr, das an einem Kraftfahrzeug, insbesondere einem Nutzfahrzeug befestigbar ist, und die Komponente 2 umfasst einen Spiegelkopf.

Somit kann beispielsweise ein Spiegelkopf mit Spiegel schnell und kostengünstig an eine rohrförmige Tragstruktur montiert werden, die in üblicher Weise beispielsweise an einem Nutzfahrzeug anbringbar ist.

Auch wenn dies im vorstehenden Ausführungsbeispiel nicht im Einzelnen erläutert wurde, ist es für den Fachmann offensichtlich, dass es möglich ist, weitere Funktionen in die einzelnen Bauteile des erfindungsgemäßen Systems zu integrieren. Beispielsweise kann die Kappe 4B des Verbindungselements 4 frei ausgestaltet werden und kann daher zusätzliche Funktionen übernehmen, die über das in der Ausführungsform gezeigte Abstützen der Feder hinausgehen.

Zusammenfassend leistet die Erfindung Folgendes:
Es wird ein System zur lösbaren Befestigung wenigstens einer Komponente an einer Tragstruktur geschaffen, wobei die Komponente über ein Verbindungselement mit Bajonettnasen federnd in einem in der Tragstruktur integrierten Gegenlager gehalten wird. Ist die Tragstruktur ein herkömmliches rundes Rohr, werden die Bajonettnasen durch die konvexe Innenrundung des Rohrs gehalten, so dass kein speziell ausgebildetes Gegenlager notwendig ist.

### Bezugszeichenliste:

- 1: Tragstruktur (Rohr)
- 2: Zu befestigende Komponente
- 2A: erste Komponente
- 2B: zweite Komponente
- 2C: Zapfen
- 2D: Aussparung
- 3: Loch (Durchsteckloch)
- 3A: Seitliche Aussparungen
- 3B: Bajonettnasen-Gegenlager
- 4: Verbindungselement
- 4A: Bajonettnasen
- 4B: Kappe
- 5: Federelement
- 6: Loch (Ausrichtloch)

## Patentansprüche

1. System, das wenigstens eine Tragstruktur und eine Komponente (2, 2A, 2B) zur lösbaren Befestigung der wenigstens einen Komponente (2, 2A, 2B) an der Tragstruktur umfasst,
wobei die Tragstruktur als wenigstens abschnittsweise rohrförmiges Bauteil (1) ausgebildet ist, das eine von der Komponente (2, 2A, 2B) abgewandte Innenseite und eine der Komponente (2, 2A, 2B) zugewandte Außenseite aufweist,
weiter mit
einem stiftförmigen, die Komponente (2, 2A, 2B) durchsetzenden Verbindungselement (4) mit einer Kappe (4B) an einem Ende und Bajonettnasen (4A) am anderen Ende,
und
einem Federelement (5) zum Fixieren der Bajonettnasen (4A) in einem Bajonettnasen-Gegenlager (3B), **gekennzeichnet durch**
eine Bajonettöffnung (3) in dem rohrförmigen Bauteil (1), die von der Außenseite zur Innenseite **durch** das rohrförmige Bauteil (1) durchgeht,
und **dadurch**, dass das Bajonettnasen-Gegenlager (3B) in das rohrförmige Bauteil (1) integriert und auf der Innenseite des rohrförmigen Bauteils (1) angrenzend an die Bajonettöffnung (3) angeordnet ist.

2. System nach Anspruch 1, **dadurch gekennzeichnet, dass** das Federelement eine zwischen Kappe (4B) und Außenseite der Tragstruktur (1) angeordnete Schraubenfeder (5) ist.

3. System nach Anspruch 2, **dadurch gekennzeichnet, dass** sich die Schraubenfeder (5) an der Kappe (4B) des Verbindungselements (4) abstützt.

4. System nach einem der vorhergehenden Ansprüche, **dadurch gekennzeichnet, dass** das Verbindungsteil (4) zwei um 180° gegeneinander versetzte Bajonettnasen (4A) umfasst.

5. System nach Anspruch 1, **dadurch gekennzeichnet, dass** die Tragstruktur mit einer Rohrhülle ausgebildet ist, die Rohrhülle einen kreisförmigen Querschnitt aufweist und das Bajonettnasen-Gegenlager (3B) durch die konvexe Rundung der Innenseite der Rohrhülle gebildet ist.

6. System nach Anspruch 1, **dadurch gekennzeichnet, dass** das wenigstens abschnittsweise rohrförmige Bauteil (1) einen rechteckförmigen Querschnitt aufweist und das Bajonettnasen-Gegenlager durch eine Nut (3B) auf der Innenseite der Rohrhülle gebildet ist.

7. System nach einem der vorhergehenden Ansprüche, **dadurch gekennzeichnet, dass** die wenigstens eine zu befestigende Komponente (2, 2A, 2B) eine komplementär zur Außenseite der Tragstruktur geformte Kontaktfläche aufweist.

8. System nach einem der vorhergehenden Ansprüche, **dadurch gekennzeichnet, dass** die wenigstens eine zu befestigende Komponente und die Außenseite der Tragstruktur Bohrungen (2D, 6) und diesen Bohrungen zugeordnete Zapfen (2C) aufweisen.

9. System nach einem der vorhergehenden Ansprüche, **dadurch gekennzeichnet, dass** das Bajonettnasen-Gegenlager (3B) so ausgebildet ist, dass sich die Bajonettnasen (4A) unter der Vorspannung durch das Federelement (5) im Gegenlager (3B) selbst ausrichten.

10. Spiegelanordnung für Kraftfahrzeuge mit einer rohrförmigen Tragstruktur, an der wenigstens ein Spiegelkopf mit einem System nach einem der vorhergehenden Ansprüche befestigt ist.

## Claims

1. A system comprising at least one carrier and component (2, 2A, 2B) for detachably fixing the at least one component (2, 2A, 2B) to the carrier, wherein the carrier is formed as an at least partially tubular member (1) having an inner surface facing away from the component (2, 2A, 2B) and an outer surface facing towards the component (2, 2A, 2B),
the system further comprising:
a pen-shaped connecting member (4) passing through the component (2, 2A, 2B), the pen-shaped connecting member (4) having a flange (4B) at one end and insertion noses (4A) at the other end;
and
a spring element (5) for fixing the insertion noses (4A) in an insertion nose reception part (3B), **characterized by**
an insertion opening (3) in the tubular member (1) passing through the tubular member (1) from the outer surface to the inner surface,
and in that the insertion nose reception part (3B) is integrated in the tubular member (1) and is disposed at the inner surface of the tubular member (1) adjacent to the insertion opening (3).

2. The system according to claim 1, **characterized in that** the spring element is a helical spring (5) disposed between the flange (4B) and the outer surface of the carrier (1).

3. The system according to claim 2, **characterized in that** the helical spring (5) is supported by the flange (4B) of the connecting member (4).

4. The system according to one of the preceding claims, **characterized in that** the connecting member (4) has two of the insertion noses (4A) that are mutually shifted by 180 degrees.

5. The system according to claim 1, **characterized in that** the carrier is formed with a tube mantle, the tube mantle has a circular cross section, and the insertion nose reception part (3B) is formed by the convex curvature of the inner surface of the tube mantle.

6. The system according to claim 1, **characterized in that** the at least partially tubular member (1) has a rectangular cross section, and the insertion nose reception part (3B) is formed as a groove provided at the inner surface of the tube mantle.

7. The system according to one of the preceding claims, **characterized in that** the at least one component (2, 2A, 2B) to be fastened has a contact surface conformable to the outer surface of the carrier.

8. The system according to one of the preceding claims, **characterized in that** the at least one component to be fastened and an outer surface of the carrier have cavities (2D, 6) and projections (2C) associated with these cavities.

9. The system according to one of the preceding claims, **characterized in that** the insertion nose reception part (3B) is formed such that the insertion noses (4A) are self-aligned against the insertion nose reception part (3B) by means of pre-stressing by the spring element (5).

10. A mirror assembly for a motor vehicle comprising a tubular carrier at which at least one mirror head is fastened using the system according to one of the preceding claims.

## Revendications

1. Système, comprenant au moins une structure porteuse et un composant (2, 2A, 2B) pour la fixation amovible du ou des composants (2, 2A, 2B) sur la structure porteuse,
où la structure porteuse est réalisée comme pièce (1) au moins partiellement tubulaire présentant une face intérieure distante du composant (2, 2A, 2B) et une face extérieure opposée au composant (2, 2A, 2B),
et comprenant en outre
un élément de connexion (4) en forme de goupille traversant le composant (2, 2A, 2B) avec un chapeau (4B) à une extrémité et un pan de baïonnette (4A) à l'autre extrémité,
et
un élément de ressort (5) pour la fixation du pan de baïonnette (4A) dans un palier (3B) de pan de baïonnette, **caractérisé par**
une ouverture pour baïonnette (3) dans la pièce tubulaire (1), laquelle traverse la pièce tubulaire (1) de la face extérieure à la face intérieure,
et en ce que le palier (3B) de pan de baïonnette est intégré à la pièce tubulaire (1) et est ménagé sur la face intérieure de la pièce tubulaire (1) en étant adjacent à l'ouverture pour baïonnette (3).

2. Système selon la revendication 1, **caractérisé en ce que** l'élément de ressort est un ressort hélicoïdal (5) disposé entre le chapeau (4B) et la face extérieure de la structure porteuse (1).

3. Système selon la revendication 2, **caractérisé en ce que** le ressort hélicoïdal (5) s'appuie sur le chapeau (4B) de l'élément de connexion (4).

4. Système selon l'une des revendications précédentes, **caractérisé en ce que** la pièce de connexion (4) comprend deux pans de baïonnette (4A) décalés de 180° l'un par rapport à l' autre .

5. Système selon la revendication 1, **caractérisé en ce que** la structure porteuse est réalisée comme enveloppe tubulaire, ladite enveloppe tubulaire présentant une section transversale circulaire, et **en ce que** le palier (3B) de pan de baïonnette est formé par un arrondi convexe de la face intérieure de l'enveloppe tubulaire.

6. Système selon la revendication 1, **caractérisé en ce que** la pièce (1) au moins partiellement tubulaire présente une section transversale rectangulaire, et **en ce que** le palier de pan de baïonnette est formé par une rainure (3B) sur la face intérieure de l'enveloppe tubulaire.

7. Système selon l'une des revendications précédentes, **caractérisé en ce que** le ou les composants (2, 2A, 2B) à fixer présentent une surface de contact de forme complémentaire à la face extérieure de la structure porteuse.

8. Système selon l'une des revendications précédentes, **caractérisé en ce que** le ou les composants à fixer et la face extérieure de la structure porteuse présentent des alésages (2D, 6) et des tenons (2C) correspondants auxdits alésages.

9. Système selon l'une des revendications précédentes, **caractérisé en ce que** le palier (3B) de pan de baïonnette est réalisé de telle manière que les pans de baïonnette (4A) s'ajustent automatiquement dans le palier (3B) sous contrainte de l'élément de ressort (5).

10. Dispositif de miroir pour véhicules automobiles avec une structure porteuse tubulaire sur laquelle est fixée au moins une tête de miroir avec un système selon l'une des revendications précédentes.
